# FASCICULE DE BREVET EUROPEEN

(11) **EP 2 903 810 B1**
(45) Date de publication et mention de la délivrance du brevet: **05.09.2018**
(21) Numéro de dépôt: 13786684.4
(22) Date de dépôt: 07.10.2013
(51) Int. Cl.: B29D 30/26, B29D 30/28

(54) **INSTALLATION ET PROCÉDÉ DE REALISATION D'UN COMPOSANT DE PNEUMATIQUE EN GOMME CRUE**
VORRICHTUNG UND VERFAHREN ZUR HERSTELLUNG EINER REIFENKOMPONENTE AUS ROHGUMMI
DEVICE AND METHOD FOR PRODUCING A TYRE COMPONENT FROM RAW RUBBER

(30) Priorité: 05.10.2012 FR 1259464
(43) Date de publication de la demande: 12.08.2015
(73) Titulaire: Compagnie Générale des Etablissements Michelin, 63000 Clermont-Ferrand (FR)
(72) Inventeur: LETOCART, Arnaud, F-63040 Clermont-Ferrand Cedex 9 (FR); CROSNIER, Gérard, F-63040 Clermont-Ferrand Cedex 9 (FR); OUGIER, Christophe, F-63040 Clermont-Ferrand Cedex 9 (FR)
(74) Mandataire: Noel, Luminita
(86) Numéro de dépôt international: PCT/FR2013/052378
(87) Numéro de publication internationale: WO 2014/057196

(56) Documents cités:
- DE-A1- 2 609 657
- DE-B- 1 181 901
- US-A- 4 039 366
- US-A- 5 441 587
- US-A1- 2010 043 949

## Description

L'invention concerne la manutention des composants servant à former les enveloppes de pneumatique.
Pour la fabrication d'un composant cylindrique destiné à faire partie d'une ébauche de pneumatique tel qu'une bande de roulement pour une enveloppe de pneumatique, il est connu d'enrouler une bandelette de gomme crue sur un tambour cylindrique tournant. On effectue l'enroulement sur plusieurs dizaines de tours et à grande vitesse. Au cours de l'enroulement, on déplace dans la direction axiale du tambour le moyen de distribution de la bandelette relativement au tambour afin d'accumuler la bandelette aux endroits souhaités et de donner sa forme générale à la bande de roulement.

Ensuite, on fait rouler des galets sur le composant de gomme crue afin d'assurer une bonne cohésion entre les couches de gomme superposées. Cette opération est effectuée manuellement au moyen d'un outil.

Il s'agit ensuite d'extraire le composant du tambour. Or cette manoeuvre est délicate à réaliser car elle doit avoir lieu sans endommager le composant de gomme crue.

Avec un tambour classique, il est nécessaire de réduire le diamètre du tambour afin d'en extraire le composant, i.e. la bande de roulement.

En outre, il est préférable de pouvoir faire varier le diamètre du tambour sur une amplitude relativement grande pour permettre de confectionner sur le même tambour des bandes de roulement correspondant à des modèles de pneumatique différents.

Cela étant, la face externe du tambour sur laquelle sont disposés les éléments en gomme doit présenter autant que possible une section transversale parfaitement circulaire. De plus, la gomme étant crue et donc fragile, cette face ne doit présenter ni relief ni cavité susceptible de l'endommager.

Or ces différentes contraintes sont difficiles à concilier. On connaît des tambours à diamètre variable comportant des éléments de cylindre d'un diamètre donné et qui cherchent à y parvenir mais ils ne donnent pas satisfaction. En effet, lorsque le tambour est porté à un diamètre supérieur ou inférieur au diamètre de ces éléments, la section du tambour n'est plus parfaitement circulaire.

Un but de l'invention est de mieux concilier ces contraintes.

À cet effet, on prévoit selon l'invention une installation selon la revendication 1.

Ainsi, le tambour a une face externe dont la section a une forme générale circulaire et dont le diamètre est variable. Cette face a une forme générale qui approche particulièrement bien celle d'un cylindre de section circulaire. Et quel que soit le diamètre choisi, on peut disposer les spires de la paroi bord à bord, de sorte que cette face ne présente ni relief ni cavité significatif susceptible d'endommager la gomme.

De plus, on peut déplacer les bras pour les mettre en appui contre le composant porté par le tambour. On peut alors diminuer le diamètre de ce dernier et extraire l'ébauche de la paroi, le composant étant porté en étant en appui contre les bras par sa face externe. Ce maintien de l'ébauche préserve sa forme et son intégrité.

Avantageusement, l'installation comprend des moyens de guidage d'un mouvement radial des bras, les moyens de guidage comprenant par exemple des glissières.

De préférence, elle comprend des moyens de manoeuvre des bras, indépendants des moyens de guidage.

On peut prévoir par exemple que l'installation comprend une came apte à manoeuvrer les bras et montée mobile par rapport aux moyens de guidage.

Avantageusement, la came présente des glissières s'étendant dans un plan perpendiculaire à l'axe.

Dans l'art antérieur précité, le roulettage étant manuel, il nécessite l'intervention d'un opérateur. De plus, ce roulettage est en général effectué d'une façon qui n'est pas uniforme sur l'ensemble du composant.

En vue d'améliorer l'étape de roulettage, on peut prévoir qu'au moins l'un des bras comporte au moins un galet apte à s'étendre en saillie du bras en direction de l'axe.

Ainsi, on peut faire tourner le tambour par rapport au dispositif pour assurer un roulettage uniforme et rapide du composant. De plus, le ou les galets du dispositif peuvent être appliqués contre la paroi pour diminuer son diamètre après que l'on a réduit le diamètre de ses moyens de support. En effet, il peut arriver que cette paroi ne prenne pas spontanément le diamètre le plus petit avec lequel elle peut être portée par les moyens de supports. Le roulettage au moyen des galets permet d'atteindre ce diamètre. Inversement, lorsqu'on cherche à augmenter le diamètre de cette paroi, on peut au début du mouvement mettre les galets en appui contre la paroi. Ensuite, à mesure qu'on augmente le diamètre, les bras s'écartent radialement les uns des autres pour accompagner le mouvement d'expansion de la paroi et faire en sorte que cette expansion soit uniforme sur toute la paroi. La paroi change donc progressivement de diamètre en roulant sur les galets. L'appui de la paroi sur les galets évite que le changement de diamètre soit concentré sur un tronçon seulement de la paroi au détriment des autres.

De préférence, le galet est monté mobile de façon à prendre une position dans laquelle il ne s'étend pas en saillie du bras en direction de l'axe.

Ainsi, on peut mettre le composant de gomme crue en appui contre les bras sans qu'il soit en appui contre les galets, ce qui réduit les risques d'endommager la gomme à leur contact.

Avantageusement, chaque bras comporte au moins un galet.

De préférence, les galets sont au moins au nombre de deux pour chaque bras.

Dans un mode de réalisation, l'installation comporte au moins une pince apte à retenir un élément dans la pince en le fixant rigidement à l'un des bras.

On prévoit également selon l'invention un procédé selon la revendication 11. Il s'agit par exemple d'une opération d'extraction du composant.

De préférence, au moins l'un des bras comportant au moins un galet apte à s'étendre en contact avec le composant, on fait rouler le ou chaque galet sur le composant.

Selon les opérations effectuées, le composant sera en contact avec les galets ou avec une face des bras sans être en contact avec les galets. Dans le premier cas, il s'agit d'une opération de roulettage. Dans le deuxième cas, il s'agit d'une opération d'extraction du composant.

De préférence, on réduit une dimension radiale du tambour de façon à faire porter le composant exclusivement par les bras.

Nous allons maintenant décrire un mode de réalisation d'un dispositif selon l'invention en référence aux dessins annexés sur lesquels :
- les figures 1 et 2 sont des vues de côté d'un tambour d'un dispositif selon un mode de réalisation de l'invention, le tambour présentant respectivement son plus petit et son plus grand diamètre ;
- la figure 3 est une vue en perspective de la paroi du tambour de la figure 1 ;
- les figures 4 et 5, et 6 et 7 sont des vues d'extrémité et en coupe axiale du tambour dans les configurations des figures 1 et 2 respectivement ;
- la figure 8 est une vue en perspective d'une entretoise portant la paroi dans le tambour de la figure 1 ;
- la figure 9 est une vue en perspective avec arrachement d'une partie du tambour de la figure 1 ;
- la figure 10 est une vue en coupe axiale d'une partie du tambour de la figure 1;
- la figure 11 est une vue partielle en coupe axiale du tambour au niveau d'une des brides ;
- la figure 12 est une vue analogue à la figure 9 montrant la fixation de l'extrémité du tambour à l'une des entretoises ;
- la figure 13 est un schéma illustrant la rotation de la paroi au cours de la variation du diamètre ;
- les figures 14 et 15 sont des vues respectivement en perspective et en vue d'extrémité d'un extracteur du dispositif de la figure 1 ;
- les figures 16 à 17 sont des vues en perspective de l'extracteur de la figure 14 en coopération avec le tambour de la figure 1 ;
- la figure 18 est un schéma illustrant une étape de la fabrication de la paroi du tambour de la figure 1 ; et
- les figures 19 et 20 sont deux vues en perspective de l'extracteur montrant les moyens de manoeuvre et de guidage des bras.

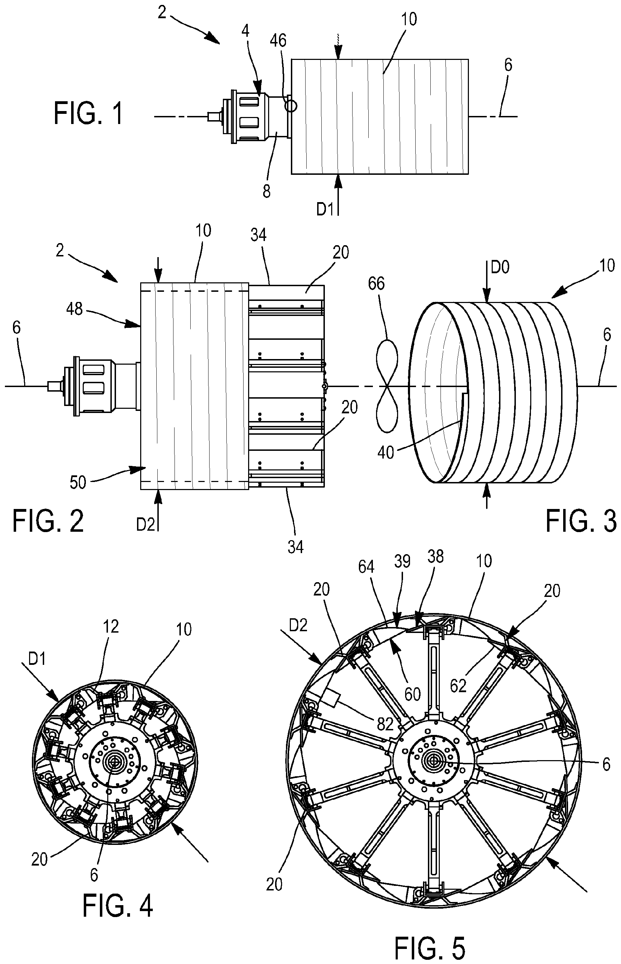

On a illustré aux figures 1 à 17 un dispositif selon l'invention servant à la fabrication d'une bande de roulement d'une ébauche d'enveloppe de pneumatique de véhicule.

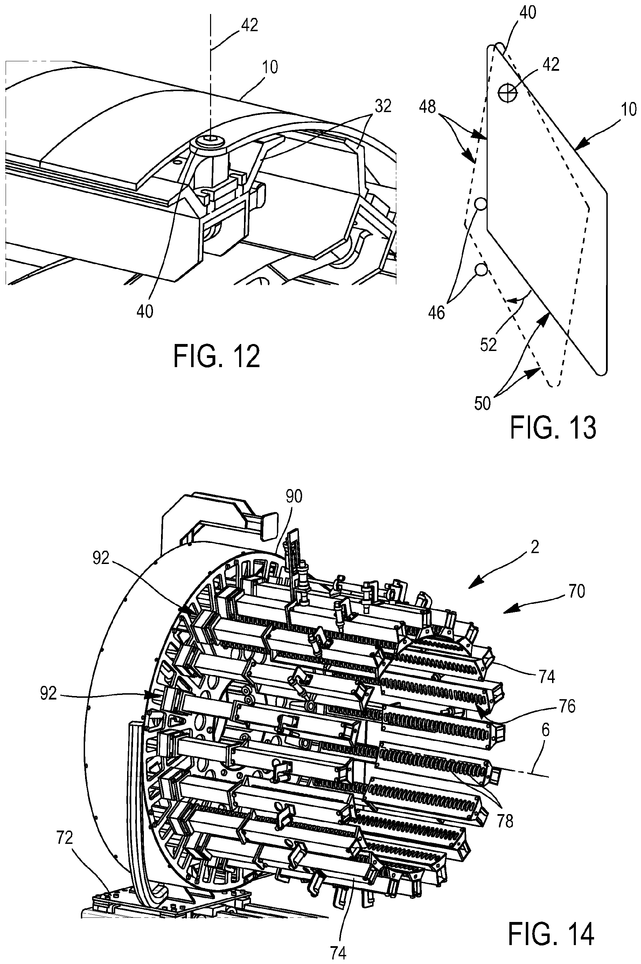

Nous allons d'abord décrire en référence aux figures 1 à 13 un tambour 4 du dispositif, puis en référence aux figures 14 à 17 et 19 à 20 un extracteur du dispositif utilisé en coopération avec le tambour.

Le tambour 4 présente une forme générale à symétrie de révolution d'axe horizontal 6. Il comporte un moyeu 8 par lequel le tambour est monté mobile à rotation par rapport à un bâti, non illustré, du dispositif, l'axe de la rotation étant l'axe 6.

Le tambour comprend une paroi externe 10, illustrée notamment aux figures 1 à 3. Cette paroi présente une forme générale cylindrique d'axe 6 et une section circulaire dans un plan perpendiculaire à l'axe. Cette paroi est réalisée en métal, et en l'espèce en aluminium. Il s'agit ici de l'aluminium appelé 7075 et traité T6.

Nous allons tout d'abord expliquer la fabrication de cette paroi.

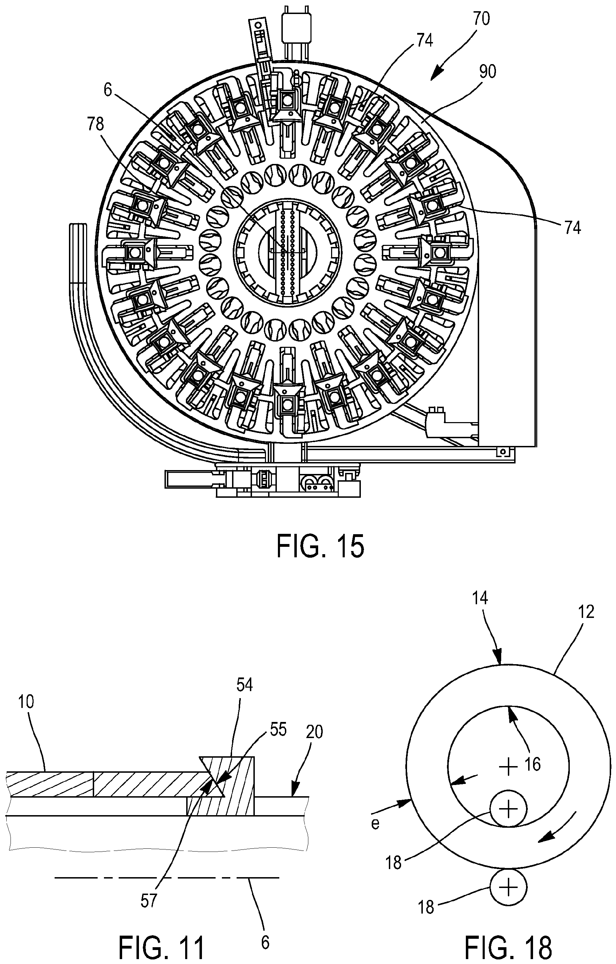

Dans une première étape, en référence à la figure 18, on fabrique un tube 12 présentant des parois cylindriques externe 14 et interne 16 à section circulaire dans un plan perpendiculaire à l'axe du tube. La fabrication du tube a lieu par laminage comme illustré à la figure 18 ou par forgeage. Pour le laminage, on fait circuler le tube entre deux cylindres de laminage 18 en appui respectivement contre ses faces interne et externe. Au cours de ce laminage, l'épaisseur e du tube diminue jusqu'à atteindre la valeur souhaitée. Le laminage a pour avantage d'augmenter la résistance de la pièce et d'orienter les cristaux dans la bonne direction.

Dans une deuxième étape, on effectue un traitement thermique du tube par une trempe à 475 °C pendant 5 heures puis un revenu à 135 °C pendant 13 heures, ces valeurs n'étant données qu'à titre d'exemple non limitatif. Ces opérations permettent d'obtenir les caractéristiques mécaniques souhaitées à savoir, en l'espèce, une résistance à la traction égale à 510 MPa et une limite d'élasticité en traction égale à 430 MPa.

Dans une étape ultérieure, on effectue une reprise en usinage de cette ébauche pour amincir encore l'épaisseur du tube jusqu'à atteindre l'épaisseur de la pièce finale.

Dans une étape ultérieure, on effectue une découpe de la paroi du tube traversant toute l'épaisseur de cette dernière et allant de l'une à l'autre de ses extrémités axiales. La découpe a une forme hélicoïdale et définit ainsi des spires successives. Elle est effectuée avec un outil orienté en direction radiale à l'axe de sorte que les spires ont des bords droits.

Ce mode de fabrication, en particulier l'usinage dans la masse, permet d'obtenir une pièce sans contrainte interne résiduelle et qui présente une bonne aptitude de travail à l'ouverture c'est-à-dire à l'agrandissement de son diamètre.

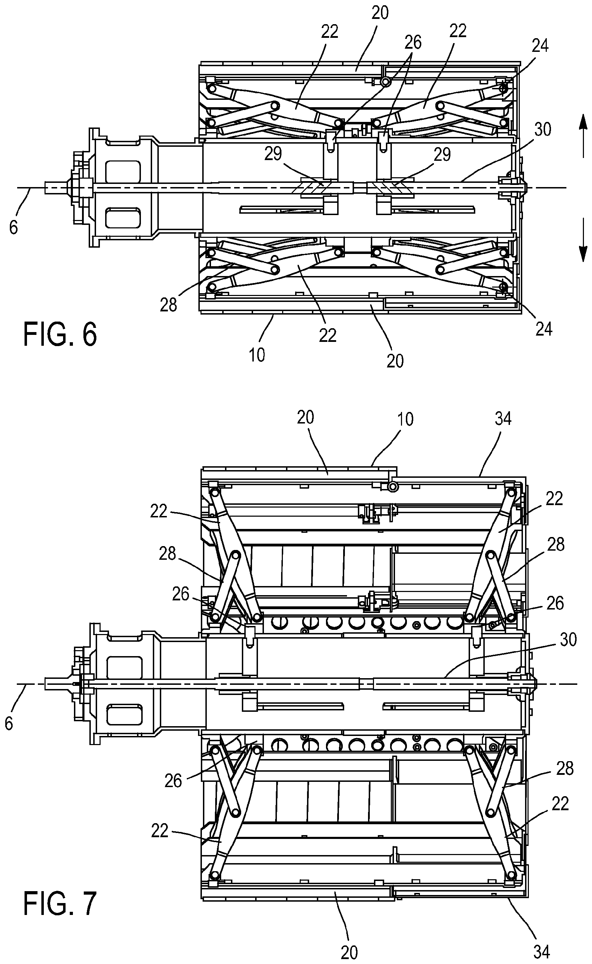

Le tambour 4 comprend des entretoises ou secteurs 20, présentant une forme générale allongée suivant une direction parallèle à l'axe 6, identiques entre elles, et régulièrement réparties autour de l'axe 6. Chaque entretoise 20 est reliée au moyeu par deux biellettes 22 visibles notamment aux figures 6 et 7. Chacune de ces biellettes présente une extrémité articulée directement à une extrémité respective de l'entretoise autour d'un axe 24 perpendiculaire à l'axe 6 et parallèle à la direction circonférentielle à cet axe. Le tambour 4 comprend deux bagues 26 auxquelles sont articulées les autres extrémités respectives des deux biellettes. Les deux bagues 26 sont montés mobiles à coulissement sur le moyeu 8 suivant la direction de l'axe 6. À chaque biellette 22 est associée une biellette 28 articulée d'une part en partie médiane de la biellette 22, et d'autre part directement au moyeu 4 sans possibilité de coulissement de cette articulation par rapport au moyeu le long de l'axe 6.

Le moyeu comprend en outre une vis axiale 30 présentant deux filets 29 orientés en sens inverses, et avec lesquels sont en prise des filets des bagues 26. La vis est montée rotative par rapport au moyeu et fixe à coulissement par rapport à ce dernier. Le dispositif comprend des moyens de motorisation, non illustrés, de la rotation de la vis.

Compte tenu de ce mécanisme, les entretoises 20 ne peuvent que se déplacer simultanément en direction radiale pour s'éloigner de l'axe ou s'en rapprocher. À tout moment, les entretoises s'étendent toutes radialement à la même distance de l'axe.

En partant de la configuration du tambour illustrée aux figures 1, 4 et 6, la rotation de la vis 30 provoque l'éloignement des deux bagues 26 l'une de l'autre en coulissement le long de l'axe 6. Les deux bagues se rapprochent donc des extrémités respectives du tambour. Ce mouvement est transmis aux biellettes et provoque le coulissement de chaque entretoise 20 suivant la direction radiale à l'axe 6 pour son éloignement de cet axe. On aboutit à la configuration du tambour illustrée aux figures 2, 5 et 7. On a donc fait passer le tambour de la configuration dans laquelle les entretoises sont les plus proches les unes des autres et les plus proches de l'axe, la paroi 10 présentant son diamètre externe minimal D1, à la configuration dans laquelle les entretoises sont les plus éloignées les unes des autres et les plus éloignés de l'axe, la paroi présentant son diamètre externe maximal D2. La rotation de la vis en sens inverse provoque le rapprochement des bagues et la diminution du diamètre de la paroi. Toutes les valeurs de diamètre intermédiaires entre ces deux extrêmes peuvent être obtenues avec les mêmes mouvements.

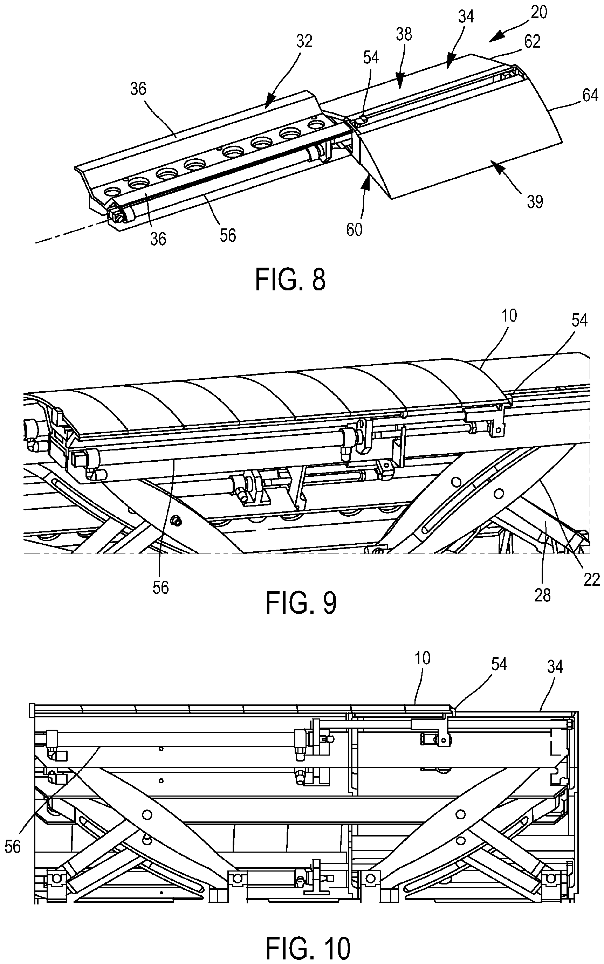

L'une des entretoises 20 a été illustrée en détail à la figure 8. Elle comporte un élément d'appui 32 et un élément de réserve 34 qui se succèdent suivant une direction parallèle à l'axe 6. L'élément d'appui 32 a une forme générale profilée à profil en « V » suivant la direction de l'axe. Les extrémités des branches du « V » sont orientées en direction opposée à l'axe. L'élément de réserve 34 présente deux faces 38, 39 de forme générale rectangulaire lui donnant une forme générale profilée à profil en « V » mais les branches sont cette fois orientées en direction de l'axe. L'élément d'appui 32 offre donc deux bords 36 permettant de supporter la paroi 10, cette dernière enjambant l'espace défini entre ces deux bords. L'élément de réserve 34 offre quant à lui les deux faces 38, 39.

Lorsque le tambour a sa configuration de plus grand diamètre D2 comme illustré à la figure 2, la paroi 10 repose principalement sur les éléments d'appui 32 sans recouvrir la plus grande partie des éléments de réserve 34. Ceux-ci forment donc, tout comme la paroi 10, une partie de la face externe du tambour. Lorsque le tambour a sa configuration de plus petit diamètre, comme illustré à la figure 1, la paroi 10 recouvre l'intégralité des éléments d'appui et des éléments de réserve de sorte qu'aucun de ceux-ci n'est plus visible. La diminution du diamètre de la paroi est donc compensée par une augmentation de sa longueur suivant la direction axiale.

En référence aux figures 12 et 13, l'extrémité 40 de la paroi hélicoïdale 10 qui est la plus proche du bâti, c'est-à-dire celle située à gauche sur les figures 1 et 2, est articulée à l'extrémité correspondante de l'une des entretoises de façon à interdire tout mouvement de cette extrémité suivant une direction quelconque par rapport à l'entretoise sauf sa rotation autour d'un axe 42 radial à l'axe 6.

Une autre des entretoises porte à son extrémité homologue un pion 46 s'étendant en saillie radiale de l'entretoise de telle sorte qu'un bord externe 48 de la première spire puisse venir en appui contre le pion. Ce bord présente deux tronçons qui se succèdent le long de la spire et ont chacun une forme développée rectiligne. Le tronçon 48, le plus proche de l'extrémité de la spire, est perpendiculaire à l'axe 6 lorsque la paroi est à son plus petit diamètre. Dans cette configuration, l'autre tronçon 50 est incliné par rapport au précédent et par rapport à l'axe 6. Ces deux tronçons ont été illustrés sur la figure 13 en donnant à la paroi 10 une forme très exagérée pour faciliter la visualisation.

Le pion est disposé de sorte que, dans la configuration de plus petit diamètre de la paroi 10, illustrée en traits pleins sur la figure 13, le pion est en appui contre le tronçon 48. En revanche, dans la configuration de plus grand diamètre, illustrée en traits pointillés, le pion est en appui contre l'autre tronçon. Le passage de l'une à l'autre de ces configurations s'effectue moyennant une rotation de l'extrémité 40 autour de l'axe 42 comme illustré par la flèche 52 de la figure 13. Le pion 46, en coopération avec la fixation de cette extrémité de la paroi, permet donc de limiter le débattement angulaire de la paroi suivant la configuration qu'elle adopte.

La paroi 10 présente une deuxième extrémité qui n'est pas reliée directement aux entretoises et est donc libre de se déplacer par rapport à toutes celles-ci.

En référence à la figure 8, chaque entretoise comprend en outre une bride 54, montée mobile à coulissement par rapport à l'entretoise suivant une direction parallèle à l'axe 6. Chaque entretoise porte en outre un actionneur, formé en l'espèce par un vérin pneumatique 56, définissant la trajectoire de la bride fixée à une tige du vérin montée coulissante dans le corps du vérin, et produisant le déplacement de la bride. Le tambour comprend des moyens, non illustrés, permettant de commander l'activation des vérins 56 ainsi que leur désactivation. Comme illustré à la figure 11, la bride a la forme d'un crochet apte à venir en appui en direction radiale et en direction de l'axe 6 contre le bord 55 de la spire d'extrémité libre de la paroi 10. À cette fin, ce bord 55 a une forme conique et est orienté en direction opposée à l'axe. De plus, la bride 54 présente une face plane 57 orientée en direction de l'axe pour venir s'appliquer contre le bord 55 en réalisant un contact surfacique. La mise en appui des deux faces inclinées du bord de la spire et de la bride permet à chacune des brides de remplir une double fonction. D'une part, sous l'action du vérin 56, chaque bride 54 tend à se déplacer en direction de la première spire d'extrémité et donc à resserrer les spires en direction les unes des autres suivant la direction de l'axe 6. D'autre part, les brides 54 maintiennent la spire d'extrémité libre en appui radial contre les entretoises 20 et interdisent donc son décollement sous l'effet de la force centrifuge lors de la rotation du tambour. Les brides permettent donc de maintenir jointives toutes les spires de la paroi 10 quel que soit le diamètre de cette dernière.

Le dispositif offre ainsi une surface quasi cylindrique continue suivant la direction axiale et la direction circonférentielle pour l'enroulement d'éléments en gomme. Il s'agit d'une surface lisse et dure. De plus, grâce à la liberté donnée à cette paroi de s'orienter par rapport aux entretoises notamment par l'articulation de son extrémité 40, les spires ne s'inclinent pas les unes par rapport aux autres ni ne se mettent en chevauchement, de sorte que la face externe de la paroi ne présente aucun relief susceptible d'endommager les éléments en gomme.

Le dispositif est dimensionné de sorte que, dans la configuration donnant son plus petit diamètre externe D1 à la paroi 10, ce diamètre demeure supérieur au diamètre externe D0 de cette paroi au repos avant son montage sur le tambour. La paroi vient donc spontanément en appui contre les entretoises. De plus, toutes les pièces étant métalliques, les entretoises se trouvent immobilisées par friction par rapport à la paroi 10 à l'encontre de leur éloignement de l'axe. Cela signifie qu'on ne peut pas commander l'éloignement des entretoises par rapport à l'axe sans préalablement décoller la paroi 10 des entretoises. Cette immobilisation renforce en outre la rigidité du tambour lorsqu'il sert de support d'enroulement des bandelettes.

Dans le présent exemple, le diamètre externe de la paroi 10 dans la configuration de la figure 1 est égal à la moitié de son diamètre dans la configuration de la figure 2.

Les faces 38 et 39 forment les faces externes de deux patins 62, 64. Le patin 64 a une face interne plane 60 orientée en direction de l'axe et présentant une arête commune avec la face 39. Quelle que soit la configuration du tambour, y compris donc la configuration de plus grand diamètre, cette face est toujours en appui par l'extérieur contre la face 38 du patin 62 de l'entretoise adjacente. Au cours du mouvement des entretoises pour la variation du diamètre, la face 60 glisse sur la face 38 suivant la direction circonférentielle. Les éléments de réserve 34 forment donc une face externe qui est en permanence continue suivant la direction circonférentielle et suivant la direction axiale. L'extrémité libre de la paroi 10 demeure en appui sur l'un quelconque de ces éléments sans risquer de pénétrer à l'intérieur du tambour.

En référence à la figure 3, on peut prévoir que le dispositif comprend un ventilateur 66 fixé au bâti et apte à faire circuler de l'air à l'intérieur de l'enceinte délimitée par la paroi 10 et les entretoises, suivant la direction de l'axe 6. La circulation d'air ainsi créé améliore le refroidissement du tambour et donc celui des éléments de gomme disposés sur ce dernier. Il accélère le transfert thermique de la gomme vers le tambour pour un meilleur refroidissement de l'ébauche en cours de constitution.

On a illustré aux figures de 14 à 17 et 19 et 20 une partie du dispositif 2 formant un extracteur 70. Cet extracteur est monté coulissant par rapport au tambour 2. On peut aussi prévoir que cet extracteur soit commun à plusieurs dispositifs 2 et puisse être associé à volonté à l'un ou l'autre des tambours en le déplaçant en regard de ceux-ci selon les besoins. On supposera dans la suite que l'axe principal horizontal de l'extracteur coïncide avec l'axe 6.

L'extracteur comprend un châssis 72 et un ensemble de bras 74 tous identiques entre eux et qui sont en l'espèce au nombre de 20, cette valeur n'étant pas limitative. Les bras ont une forme profilée allongée rectiligne horizontale. Ils sont régulièrement répartis autour de l'axe 6 et s'étendent en regard les uns des autres. Les bras définissent donc entre eux une enceinte de forme générale cylindrique à section de forme générale circulaire dans un plan perpendiculaire à l'axe. Les bras sont portés en porte-à-faux, tous du même côté, par le châssis 72 de telle sorte que les bras sont chacun montés mobiles à coulissement sur le châssis suivant une direction radiale à l'axe 6. A un instant quelconque donné, tous les bras s'étendent à la même distance radiale de l'axe. L'extracteur est agencé de sorte que les bras ne peuvent être déplacés que simultanément en direction radiale et dans le même sens de façon à tous se rapprocher de l'axe ou tous s'en éloigner. Un instant quelconque de leur mouvement, les bras sont équidistants de l'axe 6.

Chaque bras présente une face interne concave 76 de forme cylindrique à section circulaire dans un plan perpendiculaire à l'axe 6 et faisant face à ce dernier. Ces faces sont distantes les unes des autres en direction circonférentielle à l'axe.

Chaque bras comprend des galets 78 montés mobile à rotation par rapport à un corps du bras autour d'un axe commun parallèle à l'axe 6. La face 76 présente des orifices à travers lesquels les galets respectifs peuvent s'étendre en saillie de la face en direction de l'axe. De plus, les galets de chaque bras sont portés par un organe commun non représenté et lui-même monté mobile par rapport au corps du bras. Cet organe est apte à faire prendre aux galets deux positions différentes. Dans la première position, les galets s'étendent en saillie de la face 76, en direction de l'axe 6. Dans la deuxième, ils ne s'étendent pas en saillie de cette face et sont logés intégralement à l'intérieur des bras. L'extracteur comprend des moyens centralisés pour la commande et la manoeuvre des galets permettant de tous les placer simultanément dans la même position.

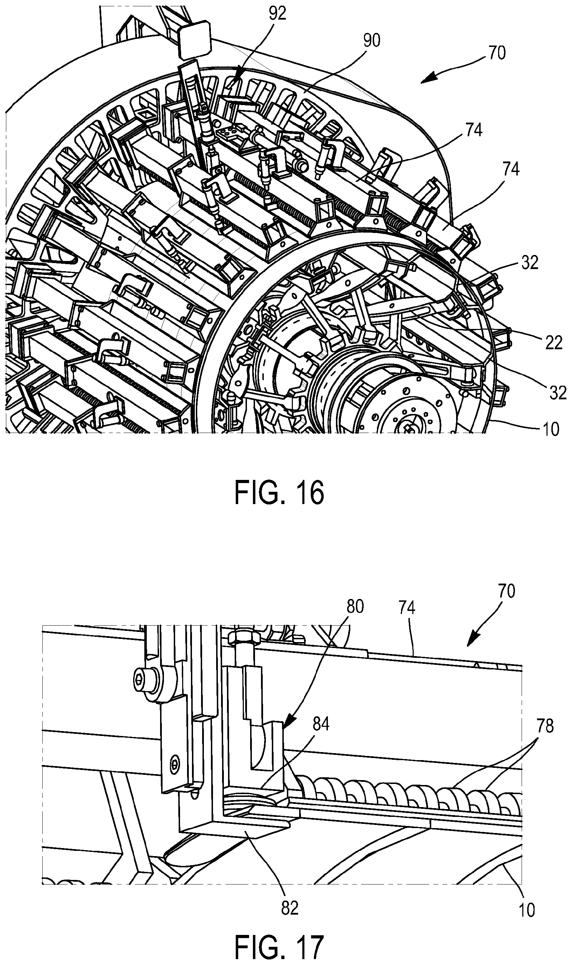

L'extracteur est agencé de façon à pouvoir accueillir entre les bras toute la partie du tambour portant la paroi 10, comme illustré à la figure 16. Dans une telle configuration, la paroi 10, éventuellement avec l'ébauche de bande de roulement qu'elle supporte, s'étend en regard des faces 76.

En référence à la figure 17, l'un des bras 74 est équipé d'une pince escamotable 80 comprenant deux mors 82, 84 mobiles l'un par rapport à l'autre en direction radiale et aptes à serrer entre eux l'extrémité libre de la paroi 10 pour l'immobiliser rigidement par rapport au bras correspondant.

Pour augmenter le diamètre de la paroi 10, on peut procéder de la façon suivante.

On suppose que le tambour se trouve dans l'extracteur, la paroi 10 ne portant pas d'ébauche de bande de roulement. La pince 80 immobilise rigidement par rapport au bras correspondant l'extrémité libre de la paroi 10. On dispose les bras de l'extracteur de sorte que les galets 76 qui sont dans la position en saillie, s'étendent en contact avec la face 10 ou presque en contact avec cette dernière. On déplace les brides de serrage pour les éloigner de la paroi 10.

On fait tourner le tambour par rapport à l'extracteur autour de l'axe 6 dans le sens correspondant à l'augmentation du diamètre de la paroi. Cela entraîne en particulier la rotation de l'extrémité de la paroi 10 fixée au tambour par rapport à son autre extrémité fixée à l'extracteur. Cela entraîne également l'augmentation du diamètre des spires de la paroi 10 qui viennent donc en appui contre les galets. Simultanément, on commande l'éloignement des bras 74 de sorte que les galets accompagnent le mouvement des spires. Ce positionnement des bras de l'extracteur permet de répartir uniformément la déformation des spires de la coque, faute de quoi on risquerait qu'une partie seulement des spires se déforme au cours du mouvement. Simultanément, on commande l'éloignement des entretoises par rapport à l'axe 6. On poursuit ces opérations jusqu'à l'obtention du diamètre externe souhaité pour la paroi 10.

Une fois ce diamètre atteint, on relâche l'extrémité libre de la paroi en ouvrant et en retirant la pince 80, puis on actionne les brides 54 afin de resserrer les spires de la paroi suivant la direction axiale.

On extrait ensuite le tambour de l'extracteur.

Pour réduire le diamètre de la paroi 10, on procède de la façon suivante. On suppose que l'on part de la même situation initiale.

On commande le rapprochement des entretoises de l'axe 6. La paroi 10 formant un ressort, cette dernière suit naturellement la réduction de dimension de son support de sorte que les spires se resserrent autour de l'axe. Une fois atteinte la position souhaitée des entretoises, on commande le déplacement des bras 74 pour mettre les galets en appui contre la paroi 10. On commande ensuite la rotation du tambour par rapport à l'extracteur pour réaliser le roulettage de cette paroi au moyen des galets, ce qui permet de refouler le jeu entre la paroi et les entretoises. Enfin, on commande le repositionnement des brides pour resserrer les spires.

Pour la réalisation d'une bande de roulement d'une enveloppe de pneumatique, on adapte le diamètre de la paroi 10 comme expliqué plus haut afin d'obtenir le diamètre souhaité. Le tambour se situant hors de l'extracteur, on enroule ensuite un ou plusieurs éléments en gomme sur la paroi 10 en faisant tourner le tambour autour de son axe afin de constituer l'ébauche de la bande de roulement. Une fois l'ébauche réalisée, on introduit le tambour portant l'ébauche dans l'extracteur, les galets se trouvant en position escamotée et donc ne dépassant pas des faces 76. On rapproche ensuite les bras de l'extracteur en direction de l'axe afin de placer leurs faces 76 en contact avec l'ébauche et de la comprimer en direction radiale. Une fois ce contact réalisé, on réduit le diamètre de la paroi 10 comme expliqué plus haut. À cette fin, pour décoller l'ébauche de la paroi 10, on fait tourner cette dernière dans le sens dans lequel les spires se resserrent sur les entretoises. Au cours de cette opération, l'ébauche demeure en contact avec les bras 74 contre lesquels elle réalise un appui uniforme et se sépare de la paroi 10 dont le diamètre se réduit. On peut alors extraire le tambour de l'ébauche et de l'extracteur. Il suffit ensuite de récupérer l'ébauche toujours présente dans l'extracteur.

Au cours des opérations ultérieures de fabrication de l'enveloppe de pneumatique, cette ébauche de bande de roulement sera assemblée avec les autres composants du pneumatique pour former une ébauche complète destinée à être cuite pour, après vulcanisation, former une enveloppe de pneumatique.

En référence à la figure 5, on peut aussi prévoir de doter le dispositif de vibrateurs 82 aptes, en raison des vibrations qu'ils produisent, à décoller la paroi 10 par rapport aux entretoises 20 afin de faciliter leur séparation lors des changements de diamètre. Cette variante peut permettre de se dispenser de prévoir un extracteur pour les changements de diamètre. On peut placer les vibrateurs sous les entretoises.

On peut aussi prévoir d'interposer entre la paroi 10 et les entretoises des patins dotés d'organes roulants sur lesquels la paroi vient en appui, les patins étant fixés aux entretoises. Cet agencement réduit considérablement la friction entre la paroi et les entretoises et facilite les changements de diamètre.

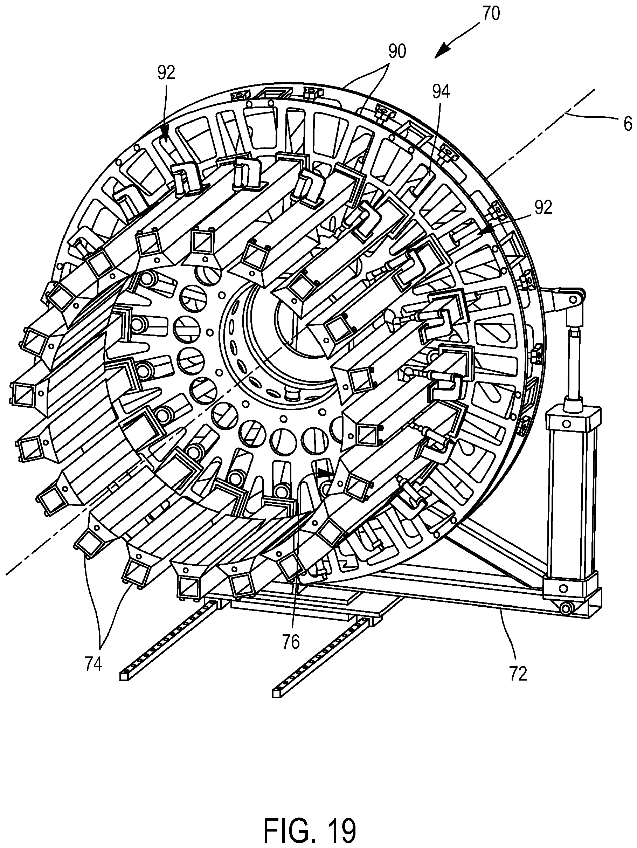

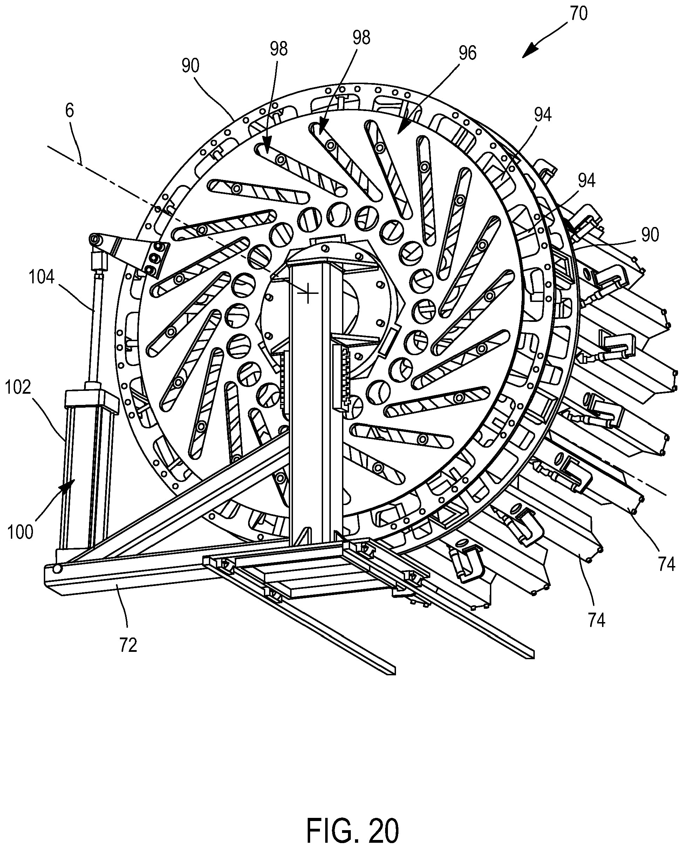

On a illustré aux figures 19 et 20 les organes de l'extracteur qui assurent la manoeuvre et le déplacement des bras 74.

Le bâti comprend deux disques 90 d'axe 6, rigidement fixés au châssis 72. Les deux disques sont en grande partie identiques l'un à l'autre. Ils ont même diamètre et sont séparés par un espace suivant la direction de l'axe 6.

Le disque avant présente dans son épaisseur des ouvertures traversantes identiques 92 formant des glissières rectilignes rectangulaires, la direction longitudinale du rectangle s'étendant suivant la direction radiale. Le nombre de glissières est identique à celui des bras. Chaque bras a sa portion d'extrémité arrière montée mobile à coulissement dans la glissière correspondante suivant la direction radiale.

Le disque arrière comprend quant à lui des tiges radiales 94 associées elles aussi aux bras de façon bijective, chaque tige étant montée mobile à coulissement dans la portion d'extrémité du bras correspondant. Les tiges sont rigidement fixées au disque arrière.

Les bras sont donc portés par les deux disques et montés coulissants en direction radiale sur ceux-ci.

L'extracteur comprend en outre une came 96 ayant elle aussi une forme de disque d'axe 6. La came est montée mobile à rotation autour de cet axe par rapport au châssis 72 et par rapport aux disques 90. La came présente dans son épaisseur des ouvertures traversantes identiques 98 formant des glissières rectilignes, la direction longitudinale de chaque glissière étant inclinée par rapport à la direction radiale. Les glissières 98 sont l'image l'une de l'autre par une rotation d'axe 6 et d'angle constant Le nombre de glissières est identique à celui des bras. Chaque bras à sa portion d'extrémité arrière montée mobile à coulissement dans la glissière correspondante dans le plan de la came. La glissière 98 de chaque bras étant inclinée par rapport à la glissière 90 du même bras, la rotation de la came 96 par rapport aux disques 90 entraîne le coulissement des bras en direction radiale.

L'extracteur comprend des moyens de motorisation formés en l'espèce par un vérin 100 comprenant un corps 102 articulé au châssis 72 et une tige 104 articulée à la came 96. La direction longitudinale du vérin est parallèle au plan général de la came et perpendiculaire à l'axe 6 sans être sécant avec ce dernier. Le coulissement de la tige par rapport au corps provoque donc la rotation de la came et le coulissement radial des bras. Ce mécanisme permet donc le déplacement simultané des bras, les bras restant équidistants de l'axe à chaque instant de leur mouvement.

Bien entendu, on pourra apporter à l'invention de nombreuses modifications sans sortir du cadre de celle-ci, comme défini dans les revendication.

On pourra par exemple se dispenser de prévoir des galets sur l'extracteur. En effet, on peut prévoir que le roulettage du composant de gomme ou celui des spires lors de la modification du diamètre du tambour se fait avec un dispositif à rouleaux ou à galets qui est indépendant de l'extracteur. L'extracteur assure alors seulement les deux fonctions suivantes: d'une part, lors de l'augmentation du diamètre du tambour, le maintien de sa paroi hélicoïdale le long de sa génératrice pour assurer son déploiement uniforme de sorte que toutes les spires ont la même amplitude de mouvement, d'autre part, lors de l'extraction de l'anneau de gomme, le maintien de l'anneau en tension pour qu'il garde sa forme circulaire pendant qu'on réduit le diamètre du tambour afin d'éviter que l'anneau ne reste collé au ressort, ne le suive et se déforme.

On peut aussi prévoir de n'utiliser l'extracteur que pour les changements de diamètre.

Bien que cela soit moins avantageux, on pourrait doter l'extracteur d'un unique galet.

De plus, le ou les galets pourraient être montés mobiles suivant la direction axiale par rapport au châssis afin d'effectuer le roulettage de différents tronçons du composant.

## Revendications

1. Installation de réalisation d'un composant de pneumatique en gomme crue, comprenant au moins un tambour (2) de fabrication du composant et un dispositif (70) de manutention du composant,
le tambour comprenant une paroi externe hélicoïdale (10) et des moyens (20) de réglage d'un diamètre de la paroi,
le dispositif comprenant un bâti (72) et des bras (74) s'étendant en regard les uns des autres parallèlement à un axe principal (6) du dispositif et montés mobiles en direction radiale à l'axe de façon à n'être mobiles qu'en restant équidistants de l'axe.

2. Installation selon la revendication précédente qui comprend des moyens (90) de guidage d'un mouvement radial des bras, les moyens de guidage comprenant par exemple des glissières (92).

3. Installation selon la revendication précédente qui comprend des moyens (96) de **manoeuvre des bras, indépendants des moyens de guidage.**

4. Installation selon au moins l'une quelconque des revendications 2 à 3 qui **comprend une came (96) apte à manoeuvrer les** bras et montée mobile par rapport aux moyens de guidage.

5. Installation selon la revendication précédente dans laquelle la came présente des glissières (98) s'étendant dans un plan perpendiculaire à l'axe.

6. Installation selon au moins l'une quelconque des revendications précédentes dans laquelle au moins l'un des bras comporte au moins un galet (78) apte à s'étendre en saillie du bras en direction de l'axe.

7. Installation selon la revendication précédente dans laquelle le galet (78) est monté mobile de façon à prendre une position dans laquelle il ne s'étend pas en saillie du bras en direction de l'axe.

8. Installation selon au moins l'une quelconque des revendications précédentes dans laquelle chaque bras (74) comporte au moins un galet.

9. Installation selon au moins l'une quelconque des revendications 6 à 8 dans laquelle les galets (78) sont au moins au nombre de deux pour chaque bras.

10. Installation selon au moins l'une quelconque des revendications précédentes qui comporte au moins une pince (80) apte à retenir un élément dans la pince en le fixant rigidement à l'un des bras.

11. Procédé de réalisation d'un composant de pneumatique en gomme crue, dans lequel, au moyen d'une installation selon l'une des revendications 1 à 10 :
- on dispose, autour du tambour (2) portant un composant de pneumatique en gomme crue, les bras (74) portés par le bâti, et
- on déplace les bras en direction radiale à l'axe de sorte que les bras restent équidistants de l'axe et de façon à mettre les bras en contact avec le composant.

12. Procédé selon la revendication précédente dans lequel, au moins l'un des bras comportant au moins un galet (78), on fait rouler le ou chaque galet sur le composant.

13. Procédé selon au moins l'une quelconque des revendications 11 à 12 dans lequel on réduit une dimension radiale du tambour (2) de façon à faire porter le composant exclusivement par les bras.

## Patentansprüche

1. Anlage zur Herstellung einer Reifenkomponente aus Rohgummi, welche wenigstens eine Trommel (2) zur Fertigung der Komponente und eine Vorrichtung (70) zur Handhabung der Komponente umfasst,
wobei die Trommel eine schraubenlinienförmige Außenwand (10) und Mittel (20) zur Regelung eines Durchmessers der Wand umfasst,
wobei die Vorrichtung ein Gestell (72) und Arme (74) umfasst, die sich einander gegenüber parallel zu einer Hauptachse (6) der Vorrichtung erstrecken und in zur Achse radialer Richtung beweglich angebracht sind, derart, dass sie nur in Äquidistanz von der Achse beweglich sind.

2. Anlage nach dem vorhergehenden Anspruch, welche Führungsmittel (90) zur Führung einer radialen Bewegung der Arme umfasst, wobei die Führungsmittel zum Beispiel Gleitschienen (92) umfassen.

3. Anlage nach dem vorhergehenden Anspruch, welche Mittel (96) zur Betätigung der Arme umfasst, die von den Führungsmitteln unabhängig sind.

4. Anlage nach wenigstens einem der Ansprüche 2 bis 3, welche einen Nocken (96) umfasst, der in der Lage ist, die Arme zu betätigen, und beweglich bezüglich der Führungsmittel angebracht ist.

5. Anlage nach dem vorhergehenden Anspruch, wobei der Nocken Gleitschienen (98) aufweist, die sich in einer zur Achse senkrechten Ebene erstrecken.

6. Anlage nach wenigstens einem der vorhergehenden Ansprüche, wobei wenigstens einer der Arme wenigstens eine Rolle (78) aufweist, die in der Lage ist, sich aus dem Arm in Richtung der Achse vorstehend zu erstrecken.

7. Anlage nach dem vorhergehenden Anspruch, wobei die Rolle (78) beweglich angebracht ist, derart, dass sie eine Position einnehmen kann, in der sie sich nicht aus dem Arm in Richtung der Achse vorstehend erstreckt.

8. Anlage nach wenigstens einem der vorhergehenden Ansprüche, wobei jeder Arm (74) wenigstens eine Rolle aufweist.

9. Anlage nach wenigstens einem der Ansprüche 6 bis 8, wobei die Anzahl der Rollen (78) für jeden Arm wenigstens zwei beträgt.

10. Anlage nach wenigstens einem der vorhergehenden Ansprüche, welche wenigstens eine Zange (80) aufweist, die in der Lage ist, ein Element in der Zange zu halten, indem sie es starr an einem der Arme fixiert.

11. Verfahren zur Herstellung einer Reifenkomponente aus Rohgummi, wobei mittels einer Anlage nach einem der Ansprüche 1 bis 10:
- um die Trommel (2) herum, die eine Reifenkomponente aus Rohgummi trägt, die von dem Gestell getragenen Arme (74) angeordnet werden, und
- die Arme in zur Achse radialer Richtung verlagert werden, derart, dass die Arme äquidistant von der Achse bleiben, und derart, dass die Arme in Kontakt mit der Komponente gebracht werden.

12. Verfahren nach dem vorhergehenden Anspruch, wobei, wenn wenigstens einer der Arme wenigstens eine Rolle (78) aufweist, die oder jede Rolle auf der Komponente rollen gelassen wird bzw. werden.

13. Verfahren nach wenigstens einem der Ansprüche 11 bis 12, wobei eine radiale Abmessung der Trommel (2) verringert wird, so dass bewirkt wird, dass die Komponente ausschließlich von den Armen getragen wird.

## Claims

1. Installation for producing a tyre component from raw rubber, comprising at least a drum (2) for manufacture of the component and a device (70) for handling the component,
the drum comprising a helicoidal external wall (10) and means (20) for adjusting a diameter of the wall,
the device comprising a supporting structure (72) and arms (74) extending opposite one another parallel to a main axis (6) of the device and mounted with the ability to move in a direction radial to the axis so as to be able to move only while remaining equidistant from the axis.

2. Installation according to the preceding claim which comprises guide means (90) for guiding a radial movement of the arms, the guide means comprising for example guideways (92).

3. Installation according to the preceding claim which comprises means (96) of manoeuvring the arms, which are independent of the guide means.

4. Installation according to at least any one of Claims 2 to 3 which comprises a cam (96) that is able to manoeuvre the arms and that is mounted with the ability to move with respect to the guide means.

5. Installation according to the preceding claim, in which the cam has guideways (98) extending in a plane perpendicular to the axis.

6. Installation according to at least any one of the preceding claims in which at least one of the arms comprises at least one roller (78) able to project out from the arm towards the axis.

7. Installation according to the preceding claim, in which the roller (78) is mounted with the ability to move so as to adopt a position in which it does not project out from the arm towards the axis.

8. Installation according to at least any one of the preceding claims, in which each arm (74) comprises at least one roller.

9. Installation according to at least any one of Claims 6 to 8, in which there are at least two of the rollers (78) for each arm.

10. Installation according to at least any one of the preceding claims which comprises at least one clamp (80) suitable for holding an element in the clamp thereby fixing it rigidly to one of the arms.

11. Method for producing a tyre component from raw rubber, in which, using an installation according to one of Claims 1 to 10:
- the arms (74) supported by the supporting structure are arranged around the drum (2) bearing a raw rubber tyre component, and
- the arms are moved in a direction radial to the axis so that the arms remain equidistant from the axis and so as to bring the arms into contact with the component.

12. Method according to the preceding claim, in which, at least one of the arms comprising at least one roller (78), the or each roller is made to roll over the component.

13. Method according to at least any one of Claims 11 to 12, in which a radial dimension of the drum (2) is reduced so that the component is borne exclusively by the arms.
